Europäisches Patentamt

European Patent Office

Office européen des brevets

(19)

(11) **EP 0 716 736 B1**

(12) **EUROPÄISCHE PATENTSCHRIFT**

(45) Veröffentlichungstag und Bekanntmachung des Hinweises auf die Patenterteilung:
**20.05.1998 Patentblatt 1998/21**

(21) Anmeldenummer: **94923662.4**

(22) Anmeldetag: **19.08.1994**

(51) Int Cl.$^6$: **G01M 11/08**

(86) Internationale Anmeldenummer:
**PCT/DE94/00951**

(87) Internationale Veröffentlichungsnummer:
**WO 95/06865 (09.03.1995 Gazette 1995/11)**

(54) **VERFAHREN UND EINRICHTUNG ZUR PRÜFUNG DER EIGENSCHAFTEN MINDESTENS EINER SPLEISSSTELLE MINDESTENS EINES LICHTWELLENLEITERS**

PROCESS AND DEVICE FOR TESTING THE PROPERTIES OF AT LEAST ONE SPLICE IN AT LEAST ONE LIGHT GUIDE

PROCEDE ET DISPOSITIF POUR LE CONTROLE DES PROPRIETES D'AU MOINS UNE EPISSURE D'AU MOINS UN GUIDE D'ONDES LUMINEUSES

(84) Benannte Vertragsstaaten:
**AT BE CH DE ES FR GB IT LI NL SE**

(30) Priorität: **30.08.1993 DE 4329182**

(43) Veröffentlichungstag der Anmeldung:
**19.06.1996 Patentblatt 1996/25**

(73) Patentinhaber: **SIEMENS AKTIENGESELLSCHAFT**
**80333 München (DE)**

(72) Erfinder: **LOCH, Manfred**
**D-81470 München (DE)**

(56) Entgegenhaltungen:
**EP-A- 0 393 878       EP-A- 0 543 577**
**DE-A- 3 429 947       US-A- 5 187 767**

- **OPTICAL ENGINEERING, Bd.30, Nr.6, Juni 1991, BELLINGHAM US Seiten 746 - 748 GLAESEMANN ET AL 'method for obtaining long-length strength'**

## Beschreibung

Die Erfindung betrifft ein Verfahren zur Prüfung der Eigenschaften mindestens einer Spleißstelle mindestens eines Lichtwellenleiters.

Nach Fertigstellung einer Spleißverbindung eines Lichtwellenleiters ist es in der Praxis von Interesse, inwieweit die fertige Spleißstelle an sie gestellte Anforderungen erfüllt. Eine Überprüfung z.B. der mechanischen Eigenschaften der fertigen Spleißstelle ist bisher jedoch nur unzureichend möglich.

Aus DE-A-34 29 947 ist eine Vorrichtung zur Bestimmung der Spleißdämpfung eines Lichtwellenleiters bekannt, bei der vor der Spleißstelle Licht in den Lichtwellenleiter eingekoppelt und nach der Spleißstelle aus dem Lichtwellenleiter ausgekoppelt und einer mit einem Meßgerät verbundenen Photodiode zugeführt wird.

US-A-5 187 767 beschreibt eine Vorrichtung zum Prüfen der mechanischen Festigkeit einer Spleißstelle in einem Lichtwellenleiter, bei welcher der Lichtwellenleiter über der Sleißstelle einer vorgegebenen Zugspannung unterworfen wird.

Der Erfindung liegt die Aufgabe zugrunde, einen Weg aufzuzeigen, wie jeweils in einfacher Weise die Eigenschaften mindestens einer fertigen Lichtwellenleiter-Spleißstelle zuverlässig überprüft werden können. Gemäß der Erfindung wird diese Aufgabe bei einem Verfahren der eingangs genannten Art dadurch gelöst, daß die Spleißstelle während einer vorgebbaren Prüfzeitdauer einer Zugspannung unterworfen wird, daß während der Belastung der Spleißstelle mit der Zugspannung vor der Spleißstelle Licht in den Lichtwellenleiter eingekoppelt und nach der Spleißstelle Licht aus dem Lichtwellenleiter ausgekoppelt wird, und daß die Leistung des ausgekoppelten Lichtes in Abhängigkeit von der Zugspannung fortlaufend bestimmt wird.

Dadurch, daß die jeweils fertige Spleißstelle einer Zugspannung unterworfen wird und dabei fortlaufend eine über die Spleißstelle transmittierte, d.h. übergekoppelte, Lichtleistung in Abhängigkeit von dieser mechanischen Zug-Belastung bestimmt wird, lassen sich vielfältigte, detaillierte Informationen über die Eigenschaften, insbesondere mechanischen Kenngrößen, der Spleißstelle gewinnen. So sind z.B. zuverlässige Aussagen über die Güte der Kern- und/oder Mantelausrichtung des jeweiligen Lichtwellenleiters im Bereich seiner Spleißstelle, über deren Zugfestigkeit, Bruchbelastbarkeit, Dehnungsverhalten, usw. ermöglicht. Da die ausgekoppelte Lichtleistung in Abhängigkeit von der mechanischen Belastung auf die Spleißstelle fortlaufend bestimmt wird, ist nicht nur eine Spleißprüfung mit den zwei Zuständen "Lichtwellenleiter gerissen" oder "Lichtwellenleiter nicht gerissen", sondern auch eine viel feiner abgestuftere Beurteilung möglich.

Die Erfindung betrifft auch eine Einrichtung zur Prüfung der mechanischen Eigenschaften mindestens einer Spleißstelle mindestens eines Lichtwellenleiters, welches dadurch gekennzeichnet ist, daß mindestens eine Zugvorrichtung vorgesehen ist, die die Spleißstelle während einer vorgebbaren Früfzeitdauer einer Zugspannung unterwirft, daß vor der Spleißstelle eine Koppelvorrichtung zur Einkopplung von Licht in den Lichtwellenleiter und nach der Spleißstelle eine Koppelvorrichtung zur Auskopplung von Licht vorgesehen sind, und daß eine Auswerte-/Steuervorrichtung vorgesehen ist, die die Leistung des ausgekoppelten Lichtes in Abhängigkeit von der Zugspannung fortlaufend bestimmt.

Sonstige Weiterbildungen der Erfindung sind in den abhängigen Ansprüchen wiedergegeben.

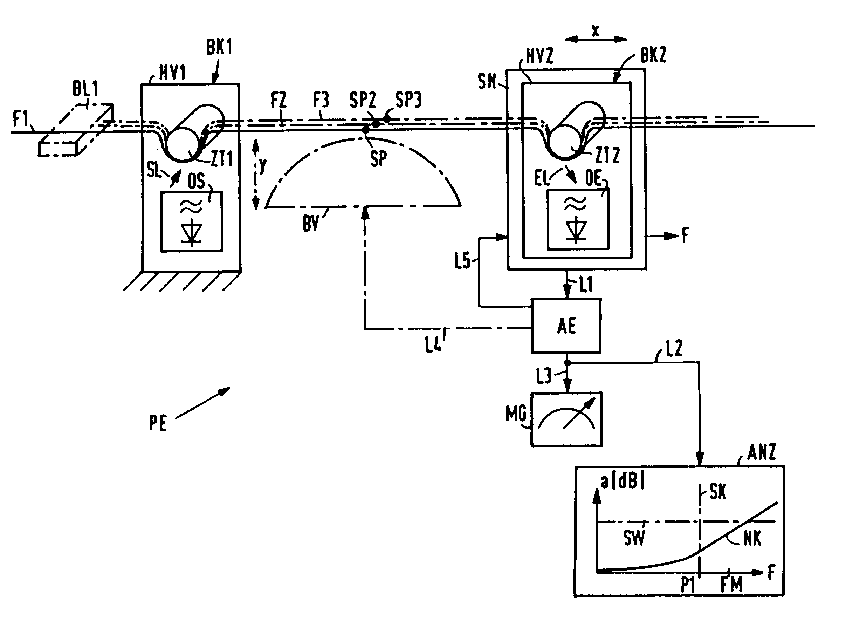

Die Erfindung und ihre Weiterbildungen werden nachfolgend anhand einer Zeichnung näher erläutert, die ein Ausführungsbeispiel einer erfindungsgemäßen Prüf- bzw. Meßeinrichtung PE zeigt. In der einzigen Figur ist beispielhaft ein Lichtwellenleiter F1 mit einer fertigen Spleißstelle SP dargestellt, die beispielsweise durch Verschweißen, durch Verkleben oder durch sonstige Verbindungen (z.B. Verbindungshülse) der vorzugsweise stirnseitig aufeinander ausgerichteten, getrennten Abschnitte des Lichtwellenleiters F1 im Bereich seiner Trennstelle hergestellt ist. Um im vorliegenden Ausführungsbeispiel in den Lichtwellenleiter F1 entlang seiner Längsachse betrachtet von links nach rechts ein Meß-Licht SL einkoppeln zu können, ist als Koppelvorrichtung vorzugsweise ein erster optischer Biegekoppler BK1 sendeseitig vorgesehen. Zur Ankopplung wird der Lichtwellenleiter F1 um einen kreiszylinderförmigen Biegedorn bzw. Biegezylinder ZT1 des Biegekopplers BK1 gekrümmt herumgeführt, wobei er in dieser Einkoppelposition von einer feststehenden Haltevorrichtung HV1 festgehalten bzw. arretiert wird. Die Haltevorrichtung HV1 ist in der Figur nur schematisch durch eine rechteckförmige Einrahmung angedeutet. Die Haltevorrichtung HV1 ist vorzugsweise durch den Grundhalter des Biegekopplers BK1 gebildet. Die Oberseite dieses Grundhalters, auf den der Biegedorn ZT1 drückt, weist zweckmäßigerweise zur definierten Aufnahme des Lichtwellenleiters F1 eine kreisbogen-segmentartige Absenkung bzw. Mulde auf. Diese ist in ihrer Geometrieform an den kreiszylinderförmigen Biegedorn ZT1 angepaßt. Im einzelnen wird zur Ankopplung des Lichtwellenleiters F1 dann so verfahren, daß dieser im geöffneten Zustand des Biegekopplers BK1 vorzugsweise in eine Nut auf der Oberseite der Haltevorrichtung HV1 eingelegt und der Biegedorn ZT1 nach unten in Richtung auf die Senke der Haltevorrichtung HV1 zu bewegt wird, so daß der Lichtwellenleiter F1 dort in definierter Weise gekrümmt geführt und definiert festgehalten bzw. fixiert wird. Der Lichtwellenleiter F1 ist somit in Längsrichtung (axialer Richtung) sowie in lateraler (seitlicher) Richtung, d.h. queraxial, durch den Biegekoppler BK1 lagegesichert. Nähere Einzelheiten zur Ankopplung eines Lichtwellenleiters nach dem Biegekopplerprinzip werden z.B. in der DE-C-34 29 947 gemacht, wo eine Vorrichtung zur Lichteinkopplung in einen Lichtwellenleiter beschrieben ist. Mittels eines optischen Senders OS, insbesondere einer Sendediode, im Krümmungsbereich des Biegekopplers BK1, wird das Meßlicht SL in den Kern des Lichtwellenleiters F1 vorzugsweise möglichst tangential eingekoppelt und über die fertige Spleißstelle SP hinweg zu einer zweiten Koppelvorrichtung, insbesondere einem zweiten Biegekoppler BK2, übertragen. Der Biegekoppler BK2 ist entsprechend dem Biegekoppler BK1 ausgebildet. Der Lichtwellenleiter F1 ist dort um einen etwa kreiszylinderförmigen Biegedorn ZT2 gekrümmt bzw. bogenförmig herumgeführt, wobei er in dieser Auskoppelposition mittels einer schematisch angedeuteten Haltevorrichtung HV2 lagefixiert ist. Die Haltevorrichtung HV2 ist dabei analog zur sendeseitigen Haltevorrichtung HV1 ausgebildet. Sie bildet insbesondere den zum Dorn ZT2 korrespondierenden Grundhalter der Koppelvorrichtung. Dabei ist der Lichtwellenleiter F1 in der Arbeitsposition des Biegekopplers BK2 zwischen dem Biegedorn ZT2 und der Haltevorrichtung HV2 in definierter Weise eingeklemmt, so daß er sich insbesondere in Längsrichtung nicht unkontrolliert bzw. selbsttätig verschieben bzw. lösen kann. Gleiches gilt gegebenenfalls auch für seine queraxiale Positionierung.

Im Krümmungsbereich des empfangsseitigen Biegekopplers BK2 ist ein optischer Empfänger OE, insbesondere eine großflächige Fotodiode positioniert. Diese erfaßt vom Meßlicht SL ausgekoppelte Lichtanteile EL und führt diese über eine Leitung L1 einer Auswerte-/Steuervorrichtung AE zu, die vorzugsweise digital und/oder analog arbeitet. Die Auswerte-/Steuervorrichtung AE weist zweckmäßigerweise eine in der Figur nicht dargestellte Recheneinheit sowie einen Meßwertspeicher auf. Insbesondere kann der optische Empfänger auch durch mehrere lichtempfindliche Elemente, insbesondere Phodioden, z.B. in Form einer Meßzeile oder Meßfeldes ("Meßarrray") gebildet sein.

Um nun vorzugsweise die mechanischen Eigenschaften der fertigen Spleißstelle SP prüfen zu können, wird diese mit einer Zugspannung F in Längsrichtung beaufschlagt. Dazu weist die Prüfeinrichtung PE eine Zugvorrichtung auf, die am Lichtwellenleiter F1 entlang dessen Längsachse mit einer Kraftkomponente zieht, die von der Spleißstelle SP in axialer Richtung weggerichtet ist. Die axial am Lichtwellenleiter F1 angreifende Zugvorrichtung ist in der Figur z.B. durch ein in Längsrichtung (axialer Richtung) des Lichtwellenleiters F1 verfahrbares Stellglied SN und dem feststehenden sendeseitigen Biegekoppler BK1 gebildet. Vorzugsweise erhält dabei das Stellglied SN über eine Leitung L5 von der Auswerte-/Steuervorrichtung AE seine Steuersignale. Der empfangsseitige Biegekoppler BK2 ist fest am Stellglied SN angebracht und somit zusammen mit diesen in axialer Richtung vorzugsweise geradlinig verschiebbar. Mittels des Stellgliedes SN kann der Biegekoppler BK2 somit in axialer Richtung verfahren werden, was mit einem Doppelpfeil x angedeutet ist. Zweckmäßigerweise weist das Stellglied SN einen Schrittmotor mit zugehörigem, axial verschiebbaren Schlitten auf. Der Biegekoppler BK2 ist vorzugsweise auf diesem Schlitten des Stellgliedes SN angebracht. Da der Lichtwellenleiter F1 im empfangsseitigen, feststehenden Biegekoppler BK2 fest eingeklemmt ist, wird seine Spleißstelle SP somit einer Zugspannung beim Verfahren des Biegekopplers BK2 nach rechts, d.h. vom feststehenden, sendeseitigen Biegekoppler BK1 weg, unterworfen. Zweckmäßigerweise ist also auf einer Seite der Spleißstelle SP der Lichtwellenleiter F1 ortsfest festgehalten, während er auf der anderen, gegenüberliegenden Seite von der Spleißstelle SP mittels einer Zugvorrichtung wegbewegt und dadurch entlang seiner Längsachse zwischen den beiden Koppelvorrichtungen z.B. KB1, KB2 geradlinig gespannt wird. Gegebenenfalls sind auch andere Relativbewegungen zwischen den beiden Koppel- bzw. Haltevorrichtungen möglich, solange eine Zugkraft auf die Spleißstelle in definierter Weise ausgeübt werden kann. So kann zusätzlich oder unabhängig zum Ausführungsbeispiel der Figur beispielsweise auch dem sendeseitigen Biegekoppler BK1 ein axial bewegliches Stellglied analog zum empfangsseitigen Stellglied SN des Biegekopplers BK2 zugeordnet sein.

Die Auswerte-/Steuervorrichtung AE steuert nun das Stellglied SN so an, daß der Biegekoppler BK2 nach rechts von der Spleißstelle SP wegbewegt wird. Da der Lichtwellenleiter F1 sendeseitig, d.h. linksseitig von der Spleißstelle SP durch den Biegekoppler BK1 ortsfest fixiert ist, wird er dabei durch die ausgeübte, axiale Zugbewegung der Zugspannung F unterworfen, d.h. gespannt. Der Biegekoppler BK2 wird durch das Stellglied SN zweckmäßigerweise derart von der Spleißstelle SP weg bis in eine vorgebbare Endposition axial verfahren, daß sich die auf die Spleißstelle SP wirksam werdende Zugspannung F fortlaufend während einer vorgebbaren Prüfzeitdauer ändert. Vorzugsweise wächst die Zugspannung während der eigentlichen Prüfzeitdauer stetig bis zu einem vorgebbaren Maximalwert an. Insbesondere kann dabei die Zugspannung F bis zu dem vorbestimmten Maximalwert linear erhöht werden, d.h. anwachsen. Gegebenenfalls kann auch ein exponentieller Anstieg der Zugspannung F während der eigentlichen Prüfzeitdauer zweckmäßig sein. Alternativ hierzu kann die Zugspannung F auf die Spleißstelle SP vorzugsweise auch im wesentlichen konstant während etwa der gesamten Prüfzeitdauer gehalten werden. Daneben kann es auch zweckmäßig sein, die Spleißstelle SP zusätzlich zur eigentlichen Prüfzeitdauer, d.h. über diese hinaus, für eine vorgebbare Restzeitdauer im wesentlichen mit konstanter Zugspannung F, insbesondere der vorgebbaren Maximalzugspannung, zu belasten, bevor der Lichtwellenleiter F1 wieder entspannt bzw. entlastet wird. Die Spleißstelle SP wird zweckmäßigerweise höchstens einer Zugspannung von 30 N, insbesondere zwischen 1 und 15 N, bevorzugt zwischen 1 und 4 N sowie vorzugsweise zwischen 1,5 und 2 N unterworfen. Die Gesamtprüfzeit (= eigentliche Prüfzeitdauer + Restzeitdauer) für die Zugspannungsbeanspruchung wird zweckmäßigerweise zwischen 1 und 20 sec, insbesondere zwischen 1 und 10 sec, gewählt, d.h. während dieser Zeitdauer steht die Spleißstelle unter Zugbeanspruchung. Die etwaige Restzeitdauer wird vorzugsweise zwischen 1 und 5 sec gewählt.

Gleichzeitig wird fortlaufend während der Belastung der Spleißstelle mit der Zugspannung F mit Hilfe des Biegekopplers BK1 das Meß- Licht SL vor der Spleißstelle SP in den Lichtwellenleiter F1 eingekoppelt und nach der Spleißstelle SP Anteile EL des über die Spleißstelle SP transmittierten bzw. gelangten Lichtes mit Hilfe des Biegekopplers BK2 ausgekoppelt. Dabei wird in Abhängigkeit von der jeweiligen Zugspannung F die ausgekoppelte Leistung des ausgekoppelten Lichtes EL mittels der Auswerte/Steuereinrichtung AE bestimmt. Vorzugsweise wird bei fortlaufender Änderung der Zugspannung F die Leistung des ausgekoppelten Lichtes EL fortlaufend bzw. ständig gemessen. Es wird also in Abhängigkeit von der jeweiligen, auf die Spleißstelle SP wirkenden Zugspannung F während der vorgebbaren Prüfzeitdauer und/oder der Restzeitdauer die über die Spleißstelle SP transmittierte, d.h. übergekoppelte Lichtleistung bestimmt und in der Auswerte-/Steuervorrichtung AE zur weiteren Auswertung bereitgestellt.

Die ausgekoppelte Lichtleistung kann in Abhängigkeit von der jeweiligen Zugspannung F beispielsweise durch eine Meßanzeigeeinrichtung MG, insbesondere einem Zeigerinstrument, erfolgen, das über eine Leitung L3 den von der Auswerte/Steuervorrichtung AE kommenden Signalpegel anzeigt. Als Prüfkriterium kann dann beispielsweise das Absinken des Signalpegels unter einen vorgebbaren Mindestwert für eine einwandfreie, weitgehend zentriert ausgeführte Spleißstelle herangezogen werden.

Anstelle des Meßanzeigegerätes MG oder ergänzend hierzu kann auch eine Anzeigevorrichtung ANZ, insbesondere ein Display, vorgesehen sein, das über eine Leitung L2 fortlaufend Kenngrößen für die ausgekoppelte Lichtleistung von der Auswerte-/Steuervorrichtung AE in Abhängigkeit von der jeweilig auf die Spleißstelle SP wirkenden Zugspannung F erhält. Die Anzeigevorrichtung ANZ zeigt in der Figur beispielsweise als Kenngröße für die mechanischen Eigenschaften der Spleißstelle SP ständig deren Dämpfung a (in dB) in Abhängigkeit der fortlaufend sich verändernden Zugspannung F. Der Einfachheit halber wird die Dämpfung a für einen geeichten Zustand der Meßeinrichtung PE bestimmt, bei dem der Absolutwert der jeweils in den Lichtwellenleiter eingekoppelten Lichtleistung bekannt ist und deshalb als Bezugsgröße für die ausgekoppelte Lichtleistung zur Verfügung steht.

Die Dämpfungsbestimmung kann beispielsweise wie im Dokument DE 34 29 947 C2 beschrieben erfolgen. Da der Wirkungsgrad der Lichtein- bzw. Lichtauskopplung bei Biegekopplern in der Praxis nicht konstant ist, wird demgegenüber die Dämpfungsmessung zweckmäßigerweise unter Berücksichtigung der vor dem Spleißvorgang vorliegenden Luftspaltdämpfung $a_b$

nach folgender Formel ausgeführt:

$$a_s = 10 \log \frac{P_b}{P_a} + a_b$$

wobei

$a_s$  die Spleißdämpfung der fertigen Spleißverbindung,

$a_b$  die Luftspaltdämpfung,

$P_b$  die gemessene Lichtleistung nach optimaler Ausrichtung der Lichtwellenleiter-Stirnseiten aufeinander, aber noch vor Herstellung der Spleißverbindung SP, und

$P_a$  die gemessene Lichtleistung nach Herstellung der Spleißverbindung ist.

Bei einwandfrei geschnittenen, d.h. möglichst glatten, etwa 90°- Bruchflächen der Lichtwellenleiter- Stirnseiten, ergibt sich insbesondere für Monomode-Fasern üblicherweise eine Luftspaltdämpfung von etwa 0,3 dB.

Eine einwandfrei ausgeführte Spleißverbindung ist beispielhaft durch die vorzugsweise kontinuierliche Dämpfungskurve NK in der Anzeigevorrichtung ANZ gekennzeichnet. Diese steigt z.B. bei gleichmäßiger Zunahme der Zugspannung F flach, d.h. mit geringer Steigung, vorzugsweise erst etwa exponentiell an und geht dann in einen nahezu linearen Verlauf ab etwa dem Kraftwert F = P1 über. Als Prüfkriterium eignet sich vorzugsweise z.B. folgendes: Solange die Dämpfungskurve NK eine vorgebbare obere Schranke bzw. Schwelle SW als noch zulässige, tolerierbare Spleißdämpfung a bis zum Erreichen eines bestimmten Maximalwertes FM für die Zugspannung F nicht überschreitet, wird die Spleißstelle SP und/oder deren Umgebung als "in Ordnung", d.h. als zugfest und deren Dämpfung als vernachlässigbar betrachtet. Die eigentliche Prüfzeitdauer ist dabei vorzugsweise durch die Zeitdauer vom relativ spannungsarmen Ausgangszustand des Lichtwellenleiters F1 mit etwa F=0 N(Newton) bis zum Erreichen seiner maximalen Zugspannungsbelastung mit F=FM N (Newton) bestimmt. Erst bei Überschreiten der oberen Dämpfungs-Schwelle a=SW im vorgegebenen Zugspannungsbereich F=0 N bis F= FM N, wird die Spleißstelle SP als nicht mehr einwandfrei, d.h. als "mangelhaft" angesehen. Zweckmäßigerweise wird bei einer Zugspannung F bis zu einem Maximalwert FM von z.B. etwa 2 bis 10 N die obere Schwelle SW für eine noch zulässige Spleißdämpfung a zwischen 0,02 und 0,5 dB festgelegt. Übersteigt die gemessene Spleißdämpfung a innerhalb des durchfahrenen Kraftbereiches von F = 0 N (Newton) bis F = FM N die obere Schwelle SW, so gilt die Spleißstelle SW als nicht einwandfrei ausgeführt. Kommt es bei der Zugprüfung gegebenenfalls sogar zum Abriß des Lichtwellenleiters F1 an der Spleißstelle SP, so nimmt für diese Zugspannung die Dämpfung a schlagartig (sprunghaft) zu, was in der Anzeigevorrichtung ANZ durch die strichpunktiert gezeichnete, vertikal verlaufende Kurve SK etwa bei der Zugkraft P1 angedeutet ist. Da dann an der gerissenen Spleißstelle SP nahezu keine Lichtüberkopplung mehr erfolgen kann, steigt die Dämpfung SK praktisch sehr stark, theoretisch bis nahezu ins Unendliche an. Auf diese Weise kann vorteilhaft aus dem vorzugsweise kontinuierlichen Verlauf der ausgekoppelten Lichtleistung während der Belastung mit sich vorzugsweise fortlaufenden Änderung der Zugspannung F die Zugfestigkeit der Spleißstelle SP geprüft sowie ggf. bestimmt werden.

Im Rahmen der Erfindung wird unter "fortlaufender Bestimmung" der ausgekoppelten Lichtleistung vorzugsweise verstanden, daß mehr als ein Meßwert für die ausgekoppelte Lichtleistung während der Prüfzeitdauer, d.h. der gezielten bzw. definierten Belastung der Spleißstelle SP mit der Zugspannung F, gewonnen wird. Dabei kann sich die Zugspannung F wie vorstehend erläutert fortlaufend, d.h. ständig verändern, oder auch im wesentlichen konstant bleiben. Besonders bevorzugt kann die Aufnahme und Beobachtung der ausgekoppelten Lichtleistung über die gesamte Prüfzeitdauer kontinuierlich (wie bei der Anzeigevorrichtung ANZ) erfolgen. Gegebenenfalls kann es auch bereits ausreichend sein, die ausgekoppelte Lichtleistung durch zeitliche Abtastung, d.h. Unterteilung des Prüfzeitintervalls aufzunehmen. Dann stehen mehrere, diskrete Meßwerte a für bestimmte Kraftwerte im vorgegeben Abtastabstand innerhalb des Zuspannungs-Prüfintervalls von F=0 N bis F= FM N zur Auswertung zur Verfügung.

Schließlich kann es insbesondere ggf. auch zweckmäßig sein, im Anschluß an eine sich fortlaufend ändernden, auf die Spleißstelle SP etwaig einwirkenden Zugspannungskraft diese zusätzlich mit einer konstanten Zugspannung, wie z.B. mit F=FM N, zu beanspruchen (= erweiterter Zugspannungs-Belastungstest). Auch während der Dauer dieser konstanten Belastung wird die empfangsseitig ausgekoppelte Lichtleistung möglichst fortlaufend erfaßt, d.h. es wird auch während dieses Restzeitabschnitts mehr als einmal, insbesondere kontinuierlich, die Lichtleistung bestimmt.

Dadurch, daß mehr als einmal ein Meßwert für die ausgekoppelte Lichtleistung während der Zugspannungsbelastung bereitgestellt wird, ist eine weitaus feiner aufgelöste, d.h. abgestuftere Beurteilung der Eigenschaften der Spleißstelle SP ermöglicht. Dies ermöglicht vorteilhaft die Beurteilung der "inneren" Übertragungseigenschaften sowie mechanischen Qualitäten von Spleißstellen, die unter der Einwirkung der ausgeübten, vorgegeben Zugspannungswerte zwar noch nicht reißen, aber dennoch fehlerhaft sind.

Anstelle der Spleißdämpfung a lassen sich aus der aufgenommenen Lichtleistung in Abhängigkeit von der jeweils anliegenden Zugbeanspruchung F also weitere, vielfältige sowie detaillierte Informationen, vorzugsweise über die mechanischen und gegebenenfalls optischen Eigenschaften, der Spleißstelle SP gewinnen. So kann die Auswerte/Steuervorrichtung AE aus der ausgekoppelten Lichtleistung im Biegekoppler BK2 vorteilhaft vielfältige Kenngrößen, wie z.B. die Güte der Kern- und/oder Mantelglasausrichtung im Bereich der Spleißstelle SP, deren Zugfestigkeit, Bruchbelastbarkeit, Dehnungsverhalten, usw. zuverlässig bestimmen. So ist beispielsweise vorteilhaft auch eine Überprüfung der Ausrichtung einer Koppelstelle (Spleißstelle) ermöglicht, die ggf. sogar ausreichend zugfest sein kann. Vorzugsweise kann die äußere Mantelglas- (cladding) ausrichtung und/oder die Kernglas- (core) ausrichtung überprüft werden. Liegt gegebenenfalls z.B. eine Fehlausrichtung in der Fasermantel-Struktur vor, so kann u. U. beim Ziehen in axialer Richtung zusätzlich eine Querkraft an der Spleißstelle SP wirksam werden. Diese Querkraft führt im Mikrobereich zu einer Verschiebung der Kernregionen, was je nach Kernausrichtung zu einer Zunahme der Dämpfung (bei gut ausgerichteten Kernen) aber auch zu einer Abnahme der Dämpfung (bei schlecht ausgerichteten Kernen) führen kann. Dadurch ist vorteilhaft eine Überprüfung der Kern-zu-Kern-Ausrichtung ermöglicht.

Es sind andererseits nicht nur Aussagen über die Kernausrichtung, sondern zusätzlich oder unabhängig hiervon gegebenenfalls auch über die Güte der Ausrichtung der äußeren Hülle bzw. des Mantelglases des Lichtwellenleiters ermöglicht. Zum Beispiel würde bei einem Lichtwellenleiter mit einem Konzentrizitätsfehler bei exakter Kernausrichtung dennoch ein äußerer Versatz vorliegen. Bei Zugbelastung dieser Spleißstelle würde sich auch das transmittierte Licht ändern, so daß vorteilhaft eine Art "Sensor" für die Ausrichtungsqualität der sich gegenüberstehenden, getrennten Abschnitte des Lichtwellenleiters F1 an der Spleißstelle SP gebildet ist.

Weiterhin kann es gegebenenfalls zweckmäßig sein, polarisiertes (vorzugsweise linear oder zirkular polarisiertes) Licht über die zu prüfende Spleißstelle zu schicken, während diese mit der Zugspannung F belastet wird. Hierbei können nach Analyse der Polarisation des Lichtes bei der empfangsseitigen Licht- Auskopplung, d.h. nach der Spleißstelle SP, detaillierte Aussagen zur Richtung der in unmittelbarer Nähe der Koppelstelle wirkenden Kräfte gemacht werden. Es sind nämlich Stoß- bzw. Koppelstellen mit einem etwaigen Versatz (Kern und/oder Mantelglasversatz) insbesondere meist etwas empfindlich gegenüber Temperaturänderungen oder Krümmungsbelastung (Biegedruckempfindlichkeit). Diese Empfindlichkeit ist im allgemeinen unerwünscht (Ausnahme: Sensortechnik). Da solche Koppelstellen (Spleißstellen) eine besondere Empfindlichkeit des transmittierten Lichts bei Zugspannung aufweisen und damit eine Dämpfungsänderung hervorrufen, sind diese damit in vorteilhafter Weise leicht zu erkennen und auszusortieren.

Da die ausgekoppelte Lichtleistung in Abhängigkeit von der mechanischen Belastung in axialer Richtung vorzugsweise fortlaufend, insbesondere kontinuierlich, analysiert wird, d.h. fortlaufend eine kombinierte Zugprüfung/Lichtleistungsprüfung durchgeführt wird, ist nicht nur eine "binäre" Prüfung mit zwei Zuständen "Lichtwellenleiter gerissen" oder "Lichtwellenleiter nicht gerissen", sondern vorteilhaft eine weitaus feiner abgestufte Beurteilung der Spleißstelle SP ermöglicht. So steht aufgrund der exemplarisch aufgenommenen Meßkurve NK in der Anzeigevorrichtung ANZ beispielsweise eine Vielzahl von Dämpfungsmeßwerten während der Zustände "spannungsfrei"(Zugspannung F=0 N) bis maximale Zugspannung F= FM N zur Beurteilung der Spleißqualität zur Verfügung. Es können dadurch vorteilhaft auch Spleißstellen als fehlerhaft erkannt werden, die unter der einwirkenden Zugspannungskraft zwar nicht reißen, aber hinsichtlich der Nachrichtenübertragung bereits eine unzulässig hohe Dämpfungsstelle darstellen.

Gegebenenfalls kann es auch zweckmäßig sein, die Spleißstelle SP ganz unterschiedlichen Kraftdiagrammen während einer vorgebbaren Prüfzeit zu unterwerfen. So kann beispielsweise die Zugspannung F während einer bestimmten (Zeitdauer) Prüfzeit konstant sein oder auch linear, exponentiell oder auf sonstige Weise bis zu einem vorgebbaren Maximalwert z.B. FM gesteigert werden. Danach kann die jeweilige Spleißstelle wie z.B. SP gegebenenfalls noch für eine bestimmte Rest-Zeitdauer einer maximalen, konstanten Zugkraft zur Dauerbelastungsprüfung ausgesetzt sein.

Zusätzlich oder unabhängig hiervon kann die Spleißstelle SP einer Zugspannung F gegebenenfalls auch dadurch unterworfen werden, daß der Lichtwellenleiter F1 zwischen dem Biegekoppler BK1 und dem Biegekoppler BK2 biegebeansprucht wird. Der Lichtwellenleiter F1 wird dabei zunächst beidseitig von der Spleißstelle SP vom Biegekoppler BK1 sowie vom Biegekoppler BK2 ortsfest derart festgehalten, daß der Lichtwellenleiterabschnitt zwischen beiden Koppelvorrichtungen vorzugsweise im wesentlichen spannungsfrei ist. Mittels einer Biegevorrichtung BV, die queraxial, d.h. quer zur Längsachse des Lichtwellenleiters F1, verschiebbar ist, was durch einen Doppelpfeil y angedeutet ist, wird dann der Lichtwellenleiter F1 gebogen und dabei einer Zugbeanspruchung in Längsrichtung sowie einer Biegebeanspruchung quer dazu ausgesetzt. Als Biegevorrichtung BV eignet sich beispielsweise ein kreiszylinderförmiger Dorn bzw. Biegezylinder von dem ein halbkreiszylinderförmiger Segmentausschnitt in der Figur strichpunktiert angedeutet ist. Die Biegevorrichtung BV läßt sich vorzugsweise über eine Leitung L4 von der Auswerte/Steuervorrichtung AE in definierter Weise ansteuern und queraxial in y-Richtung (- vorzugsweise senkrecht zur x-Richtung- ) verschieben.

Die erfindungsgemäße Prüfeinrichtung PE und/oder das zugehörige erfindungsgemäße Prüfverfahren kann vorteilhaft auch zur Prüfung der mechanischen Eigenschaften einer Mehrfachspleißstelle, wie sie zum Beispiel bei einem Lichtwellenleiter-Bändchen mit mindestens einer oder mehreren Einzelfasern oder Einzel-Lichtwellenleiter vorliegen kann, eingesetzt werden. Im linken Teil der Figur ist die etwa rechteckförmige Außenhülle eines Lichtwellenleiter-Bändchens BL1 strichpunktiert angedeutet und dann im übrigen Figurenteil der Übersichtlichkeit halber weggelassen worden. Das Lichtwellenleiter-Bändchen BL1 weist beispielhaft drei Lichtwellenleiter F1 mit F3 mit den zugehörigen Spleißstellen SP, SP2 und SP3 auf. Die Überprüfung der mechanischen Eigenschaften der Spleißstellen SP2 und SP3 erfolgt dann analog zum Vorgehen bei der Spleißstelle SP für jeden einzelnen Lichtwellenleiter F2 und F3 getrennt, d.h. also faserselektiv. Ggf. kann jeder Einzel- Lichtwellenleiter auch mehr als eine Spleißstelle zur Überprüfung aufweisen. Insbesondere erlaubt das erfindungsgemäße Verfahren auch dann die Überprüfung von mehr als einer Spleißstelle gleichzeitig.

Bevorzugt ist die erfindungsgemäße Prüfeinrichtung PE Bestandteil eines Einfach- oder Mehrfach-LichtwellenleiterSpleißgerätes, eines Dämpfungs-Meßgeräts oder sonstigen Lichtwellenleiter-Prüfgeräts.

Die Bestimmung der Spleißdämpfung kann dabei gegebenenfalls auch z.B., wie in der DE 38 28 604 A1 beschrieben, erfolgen. So kann das dort beschriebene, sogenannte "LID"-System (Light Injection and Detection") ebenfalls zur Überprüfung der Spleißstelle verwendet werden. Darunter wird dort ein Meßsystem verstanden, bei dem in einem ersten Meßvorgang das Meßsignal (Meßlicht) eines ersten Senders am Ausgang eines optischen Mediums (wie z.B. einem Lichtwellenleiter) in einem ersten Meßempfänger gemessen wird. In einem zweiten Meßvorgang wird in Gegenrichtung das Meßsignal (Meßlicht) eines zweiten Meßsenders der anderen Seite des optischen Mediums in einem zweiten Meßempfänger gemessen. In einem dritten Meßvorgang wird das Meßsignal (Meßlicht) des ersten Meßsenders noch vor dem optischen Medium mittels des zweiten Meßempfängers gemessen und in einen vierten Meßvorgang das Meßsignal des zweiten Meßsenders im ersten Meßempfänger. Aus den so erhaltenen vier Meßwerten läßt sich im wesentlichen die Dämpfung des optischen Mediums in der Art einer Relativmessung bestimmen. Die Auskopplung der Meßsender und Meßempfänger erfolgt vorteilhaft mittels Biegekoppler. In der Zugvorrichtung, z.B. gebildet durch HV1, HV2, SN, sind dann besonders bevorzugt die jeweiligen Biegekoppler zum Senden und Empfangen, d.h. die Koppelvorrichtungen (vgl. BK1, BK2 in der Figur) integriert.

Vorzugsweise ist folgende Vorgehensweise zur Überprüfung der mechanischen Eigenschaften einer Spleißstelle in der Praxis zweckmäßig:

Zwei miteinander zu verbindende Lichtwellenleiterabschnitte werden an ihren miteinander zu verspleißenden Stirnseiten präpariert, in das Spleißgerät, insbesondere FusionsSchweißgerät, eingelegt, aufeinander stirnseitig ausgerichtet und der Spleißvorgang, insbesondere Schweißvorgang, gestartet. Nach dem Verspleißen, insbesondere Verschweißen, mißt das Spleißgerät die Spleißdämpfung.

Ein derart gespleißter Lichtwellenleiter verbleibt vorteilhaft in dem Spleißgerät zur erfindungsgemäßen Zugprüfung. Die Zugprüfung wird gestartet, wobei das Spleißgerät zugleich überprüft, ob die beiden miteinander verbundenen Lichtwellenleiterabschnitte korrekt in das Haltesystem eingelegt sind. Das für die Dämpfungsbestimmung vorgesehene Meß-System ist bevorzugt in die für die Zugprüfung zur Fixierung der Lichtwellenleiterabschnitte notwendigen Haltesysteme integriert, so daß auch eine Kontrolle der richtigen Handhabung des Einlegevorgangs vorteilhaft ermöglicht ist. Das Meßsystem erkennt somit automatisch, ob das Testobjekt (Lichtwellenleiter) vorschriftsmäßig eingelegt wurde und gibt gegebenenfalls dem Benutzer entsprechende Anweisungen. Anschließend mißt das Meßsystem den Intensitätspegel des über die unbelastete Spleißstelle transmittierten Lichtes, der als Bezugsgröße für nachfolgende Dämpfungsmessungen während der Zugprüfung hergenommen werden kann.

Dann wird die eigentliche Zugprüfung vorzugsweise mit einer sich zeitlich ändernden Zugspannung gestartet, um die mechanischen Eigenschaften der fertigen Spleißstelle zu testen. Während der Zugprüfung wird stets, d.h. ständig bzw. kontinuierlich der Leistungspegel des über die Spleißstelle transmittierten Lichts beobachtet. Zweckmäßig kann es sein, die Zugprüfung sofort zu beenden, falls der Pegel des transmittierten Lichts sich stärker als eine vorgegebene Schranke ändert. Wird zum Beispiel eine Dämpfungsänderung, insbesondere Dämpfungszunahme, von etwa 0,05 bis 0,2 dB registriert, so wird die Zugprüfung abgebrochen und die Spleißstelle als unzulässig betrachtet. Läuft hingegen die Zugprüfung über eine fest eingestellte Gesamt- Prüfzeit regulär ab, d.h. ohne Überschreiten der vorgesehenen, maximal erlaubten Dämpfungsänderung, wird die Spleißstelle als "einwandfrei" bewertet. Üblicherweise wird hier eine Prüfzeit zwischen 1 sec und 20 sec, insbesondere 1 und 10 sec, bevorzugt zwischen 1 und 5 sec, gewählt. Damit ist vorteilhaft eine prozentuale oder gegebenenfalls sogar eine absolute Angabe der Dämpfungsänderung ermöglicht, die sich gegenüber der ausgekoppelten Lichtleistung vor Durchführung der Zugprüfung, d.h. im weitgehend unbeanspruchten Zustand der Spleißstelle ergibt. Änderungen der Dämpfung aufgrund der mechanischen Belastung können anhand des transmittierten Pegels also detektiert werden. Ggf. kann abschließend nochmals eine zusätzliche Messung des Pegels des transmittierten Lichts nach der Zugprüfung zur zusätzlichen Kontrolle vorgenommen werden.

Da die Spleißstelle auf Zug beansprucht wird und zugleich in Abhängigkeit von der insbesondere sich ändernden Zugspannung die jeweils über die Spleißstelle übergekoppelte Lichtleistung fortlaufend bestimmt wird, können vorzugsweise die tatsächlichen, mechanischen Eigenschaften der Spleißstelle sowie deren Umgebung weitaus besser beurteilt werden wie z.B. bei üblichen visuellen Kontrollen der Spleißstelle allein. Es wird also vorzugsweise eine Zugprüfung in Kombination mit einer Lichtleistungsmessung, insbesondere Spleißdämpfungsmessung, durchgeführt. Anders ausgedrückt wird die jeweils fertige Spleißstelle vorzugsweise einer sich zeitlich verändernden Zugkraft ausgesetzt und dabei gleichzeitig die Veränderung der über die Spleißstelle transmittierten (übergekoppelten) Lichtleistung beobachtet, d.h. insbesondere gemessen und zur weiteren Auswertung bereitgestellt.

**Patentansprüche**

1. Verfahren zur Prüfung der Eigenschaften mindestens einer Spleißstelle (SP) mindestens eines Lichtwellenleiters (F1), wobei vor der Spleißstelle (SP) Licht (SL) in den Lichtwellenleiter (F1) eingekoppelt und nach der Spleißstelle (SP) Licht (EL) aus dem Lichtwellenleiter (F1) ausgekoppelt wird, **dadurch gekennzeichnet,** daß die Spleißstelle (SP) während einer vorgebbaren Prüfzeitdauer einer Zugspannung (F) unterworfen wird, und daß während der Belastung der Spleißstelle (SP) mit der Zugspannung (F) die Leistung des ausgekoppelten Lichtes (EL) in Abhängigkeit von der Zugspannung (F) fortlaufend bestimmt wird.

2. Verfahren nach Anspruch 1, **dadurch gekennzeichnet,** daß die Zugspannung (F) während etwa der gesamten Prüfzeitdauer im wesentlichen konstant gehalten wird.

3. Verfahren nach Anspruch 1, **dadurch gekennzeichnet,** daß die Zugspannung (F) während der Prüfzeitdauer fortlaufend verändert wird, und daß während der Änderung der Zugspannung (F) in Abhängigkeit von dieser die Leistung (a) des ausgekoppelten Lichtes (EL) bestimmt wird.

4. Verfahren nach Anspruch 3, **dadurch gekennzeichnet,** daß die auf die Spleißstelle (SP) wirksam werdende Zugspannung (F) stetig bis zu einem vorgebbaren Maximalwert (FM) erhöht wird.

5. Verfahren nach einem der Ansprüche 3 oder 4, **dadurch gekennzeichnet,** daß die Zugspannung (F) im wesentlichen linear erhöht wird.

6. Verfahren nach einem der Ansprüche 3 oder 4, **dadurch gekennzeichnet,** daß die Zugspannung (F) im wesentlichen exponentiell erhöht wird.

**7.** Verfahren nach einem der Ansprüche 3 oder 4,
**dadurch gekennzeichnet,**
daß die Zugspannung (F) zuerst exponentiell und
dann linear erhöht wird.

**8.** Verfahren nach einem der Ansprüche 3 mit 7,
**dadurch gekennzeichnet,**
daß die Zugspannung (F) zusätzlich zur Prüfzeitdauer für eine bestimmte Restzeitdauer im wesentlichen konstant gehalten wird, und daß während
dieser Restzeitdauer die Leistung des ausgekoppelten Lichtes (EL) fortlaufend gemessen wird.

**9.** Verfahren nach einem der vorhergehenden Ansprüche,
**dadurch gekennzeichnet,**
daß der Lichtwellenleiter (F1) auf einer Seite seiner
Spleißstelle (SP) festgehalten wird, und daß er auf
der gegenüberliegenden Seite seiner Spleißstelle
(SP) mittels einer Zugvorrichtung (SN) entlang seiner Längsachse gezogen wird.

**10.** Verfahren nach einem der vorhergehenden Ansprüche,
**dadurch gekennzeichnet,**
daß der Lichtwellenleiter (F1) vor und nach seiner
Spleißstelle (SP) festgehalten wird, und daß er dazwischen mittels einer Biegevorrichtung (BV) derart
gebogen wird, daß er in Längsrichtung einer Zugspannung (F) unterworfen wird.

**11.** Verfahren nach einem der vorhergehenden Ansprüche,
**dadurch gekennzeichnet,**
daß die Spleißstelle (SP) einer Zugspannung von
höchstens 30 N, insbesondere zwischen 2 und 15
N, unterworfen wird.

**12.** Verfahren nach einem der vorhergehenden Ansprüche,
**dadurch gekennzeichnet,**
daß aus dem Verlauf der ausgekoppelten Lichtleistung die Zugfestigkeit der Spleißstelle (SP) bestimmt wird.

**13.** Verfahren nach einem der vorhergehenden Ansprüche,
**dadurch gekennzeichnet,**
daß zur fortlaufenden Bestimmung der Lichtleistung diese kontinuierlich während der Prüfzeitdauer gemessen wird.

**14.** Verfahren nach einem der Ansprüche 1 mit 12,
**dadurch gekennzeichnet,**
daß zur fortlaufenden Bestimmung der Lichtleistung diese diskret mit mehr als einem
Abtastmeßwert während der Prüfzeitdauer gemessen wird.

**15.** Einrichtung (PE) zur Prüfung der mechanischen Eigenschaften mindestens einer Spleißstelle (SP)
mindestens eines Lichtwellenleiters (F1), insbesondere zur Durchführung des Verfahrens nach einem
der vorhergehenden Ansprüche, wobei vor der
Spleißstelle (SP) eine Koppelvorrichtung (BK1) zur
Einkopplung von Licht (SL) in den Lichtwellenleiter
(F1) und nach der Spleißstelle (SP) eine Koppelvorrichtung (BK2) zur Auskopplung von Licht (EL) vorgesehen sind,
**dadurch gekennzeichnet,**
daß mindestens eine Zugvorrichtung (SN) vorgesehen ist, die die Spleißstelle (SP) während einer vorgebbaren Prüfzeitdauer einer Zugspannung (F) unterwirft, und daß eine Auswerte-/Steuervorrichtung
(AE) vorgesehen ist, die die Leistung des ausgekoppelten Lichtes (EL) in Abhängigkeit von der Zugspannung (F) fortlaufend bestimmt.

**16.** Einrichtung nach Anspruch 15,
**dadurch gekennzeichnet,**
daß die Einrichtung (PE) Bestandteil eines Lichtwellenleiter-Spleißgerätes ist.

**17.** Einrichtung nach einem der Ansprüche 15 oder 16,
**dadurch gekennzeichnet,**
daß die Zugvorrichtung durch ein in Längsrichtung
des Lichtwellenleiters (F1) verfahrbares Stellglied
(SN) gebildet ist.

**18.** Einrichtung nach einem der Ansprüche 15 mit 17,
**dadurch gekennzeichnet,**
daß als Koppelvorrichtung jeweils ein Biegekoppler
(BK1, BK2) vorgesehen ist.

**19.** Einrichtung nach einem der Ansprüche 15 mit 18,
**dadurch gekennzeichnet,**
daß die Zugvorrichtung durch eine Biegevorrichtung (BV) gebildet ist, die den Lichtwellenleiter (F1)
zwischen seinen beiden Koppelvorrichtungen
(BK1, BK2) quer zu seiner Längserstreckung biegt.

**20.** Einrichtung nach einem der Ansprüche 15 mit 19,
**dadurch gekennzeichnet,**
daß in die Zugvorrichtung (HV1, HV2, SN) die Koppelvorrichtungen (BK1, BK2) integriert sind.

**Claims**

**1.** Method for testing the properties of at least one
splice (SP) in at least one optical waveguide (F1),
light (SL) being launched into the optical waveguide
(F1) upstream of the splice (SP) and light (EL) being
coupled out of the optical waveguide (F1) downstream of the splice (SP), characterized in that during a prescribable test period the splice (SP) is subjected to a tensile stress (F), and in that during loading of the splice (SP) by means of the tensile stress (F) the power of the coupled-out light (EL) is determined continuously as a function of the tensile stress (F).

2. Method according to Claim 1, characterized in that the tensile stress (F) is kept essentially constant during approximately the entire test period.

3. Method according to Claim 1, characterized in that the tensile stress (F) is continuously varied during the test period, and in that during the change in the tensile stress (F) the power (a) of the coupled-out light (EL) is determined as a function thereof.

4. Method according to Claim 3, characterized in that the tensile stress (F) which comes to act on the splice (SP) is continuously increased up to a prescribable maximum value (FM).

5. Method according to one of Claims 3 or 4, characterized in that the tensile stress (F) is increased in an essentially linear fashion.

6. Method according to one of Claims 3 or 4, characterized in that the tensile stress (F) is increased in an essentially exponential fashion.

7. Method according to one of Claims 3 or 4, characterized in that the tensile stress (F) is increased at first exponentially and then linearly.

8. Method according to one of Claims 3 to 7, characterized in that in addition to the test period, the tensile stress (F) is kept essentially constant for a specific residual period, and in that during this residual period the power of the coupled-out light (EL) is measured continuously.

9. Method according to one of the preceding claims, characterized in that the optical waveguide (F1) is retained at one end of its splice (SP), and in that it is pulled along its longitudinal axis at the opposite end of its splice (SP) by means of a tension device (SN).

10. Method according to one of the preceding claims, characterized in that the optical waveguide (F1) is retained upstream of and downstream of its splice (SP), and in that it is bent therebetween by means of a bending device (BV) in such a way that it is subjected to a tensile stress (F) in the longitudinal direction.

11. Method according to one of the preceding claims, characterized in that the splice (SP) is subjected to a tensile stress of at most 30 N, in particular of between 2 and 15 N.

12. Method according to one of the preceding claims, characterized in that the tensile strength of the splice (SP) is determined from the characteristic of the coupled-out optical power.

13. Method according to one of the preceding claims, characterized in that in order to determine the optical power continuously the latter is measured continuously during the test period.

14. Method according to one of Claims 1 to 12, characterized in that in order to determine the optical power continuously the latter is measured discretely by means of more than one sampled measured value during the test period.

15. Device (PE) for testing the mechanical properties of at least one splice (SP) in at least one optical waveguide (F1), in particular for carrying out the method according to one of the preceding claims, a coupling device (BK1) being provided upstream of the splice (SP) for launching light (SL) into the optical waveguide (FI) and a coupling device (BK2) being provided downstream of the splice (SP) for coupling light (EL) out, characterized in that at least one tension device (SN) is provided which subjects the splice (SP) to a tensile stress (F) during a prescribable test period, and in that an evaluation/control device (AE) is provided which determines the power of the coupled-out light (EL) continuously as a function of the tensile stress (F).

16. Device according to Claim 15, characterized in that the device (PE) is a component of an optical waveguide splicer.

17. Device according to one of Claims 15 or 16, characterized in that the tension device is formed by an actuator (SN) which can be moved in the longitudinal direction of the optical waveguide (F1).

18. Device according to one of Claims 15 to 17, characterized in that a bending coupler (BK1, BK2) is respectively provided as coupling device.

19. Device according to one of Claims 15 to 18, characterized in that the tension device is formed by a bending device (BV) which bends the optical waveguide (F1) transverse to its longitudinal extent between its two coupling devices (BK1, BK2).

20. Device according to one of Claims 15 to 19, characterized in that the coupling devices (BK1, BK2) are integrated in the tension device (HV1, HV2, SN).

## Revendications

1. Procédé pour le contrôle des propriétés d'au moins une épissure (SP) d'au moins un guide d'ondes lumineuses (F1), de la lumière (SL) étant couplée dans le guide d'ondes lumineuses (F1), en amont de l'épissure (SP), et de la lumière (EL) étant découplée du guide d'ondes lumineuses (F1), en aval du point d'épissure (SP),
**caractérisé par le fait**
que l'épissure (SP) est soumise à un effort de traction (F) pendant une durée de test, qui peut être prédéfinie, et que, pendant la contrainte de l'épissure (SP) à l'effort de traction (F), la puissance de la lumière découplée (EL) est déterminée, d'une façon continue, en fonction de l'effort de traction (F).

2. Procédé selon la revendication 1
**caractérisé par le fait**
que l'effort de traction (F) est maintenu, pour l'essentiel, constant pendant environ toute la durée du test.

3. Procédé selon la revendication 1
**caractérisé par le fait**
que l'effort de traction (F) varie en permanence pendant la durée du test et que, pendant la variation de l'effort de traction (F), la puissance (a) de la lumière découplée (EL) est déterminée en fonction de l'effort de traction (F).

4. Procédé selon la revendication 3,
**caractérisé par le fait**
que l'effort de traction (F) agissant sur l'épissure (SP) augmente d'une façon continue jusqu'à une valeur maximum (FM), qui peut être fixée au préalable.

5. Procédé selon une des revendications 3 ou 4,
**caractérisé par le fait**
que l'effort de traction (F) augmente, pour l'essentiel, d'une façon linéaire.

6. Procédé selon une des revendications 3 ou 4,
**caractérisé par le fait**
que l'effort de traction (F) augmente, pour l'essentiel, d'une façon exponentielle.

7. Procédé selon une des revendications 3 ou 4,
**caractérisé par le fait**
que l'effort de traction (F) augmente d'abord d'une façon exponentielle, puis, d'une façon linéaire.

8. Procédé selon une des revendications 3 à 7,
**caractérisé par le fait**
que l'effort de traction (F) est, au delà de la durée de test, maintenu, pour l'essentiel, constant, pendant une certaine durée résiduelle, et que, pendant cette durée résiduelle, la puissance de la lumière découplée (EL) est mesurée en permanence.

9. Procédé selon une des revendications précédentes,
**caractérisé par le fait**
que le guide d'ondes lumineuses (F1) est maintenu fixe d'un côté de son épissure (SP) et que, au moyen d'un mécanisme de traction (SN), il est soumis à une traction, le long de son axe longitudinal, de l'autre côté de son épissure (SP).

10. Procédé selon une des revendications précédentes,
**caractérisé par le fait**
que le guide d'ondes lumineuses (F1) est maintenu fixe en amont et en aval de son épissure (SP) et qu'entre ces deux points, il est ployé, au moyen d'un mécanisme en flexion (BV), de telle sorte qu'il est soumis, dans le sens longitudinal, à un effort de traction (F).

11. Procédé selon une des revendications précédentes,
**caractérisé par le fait**
que l'épissure (SP) est soumise à un effort de traction d'au plus 30 N, compris, en particulier, entre 2 et 15 N.

12. Procédé selon une des revendications précédentes,
**caractérisé par le fait**
que la résistance à la traction de l'épissure (SP) est déterminée à partir de l'évolution de la puissance lumineuse découplée.

13. Procédé selon une des revendications précédentes,
**caractérisé par le fait**
que, pour la détermination ininterrompue de la puissance lumineuse, celle-ci est mesurée d'une façon continue pendant la durée de test.

14. Procédé selon une des revendication 1 à 12,
**caractérisé par le fait**
que, pour la détermination ininterrompue de la puissance lumineuse, celle-ci est mesurée d'une façon discrète avec plus d'une valeur de mesure pendant la période de test.

15. Dispositif (PE) pour le contrôle des propriétés mécaniques d'au moins une épissure (SP) d'au moins un guide d'ondes lumineuses (F1), en particulier pour l'exécution du procédé selon une des revendications précédentes, un dispositif de couplage BK1 étant prévu, en amont de l'épissure (SP), pour le couplage de lumière (SL) dans le guide d'ondes lumineuses (F1) et un dispositif de couplage BK2 étant prévu, en aval de l'épissure (SP), pour le découplage de lumière (EL),

**caractérisé par le fait**

qu'est prévu au moins un mécanisme de traction (SN), qui soumet, pendant une durée de test, qui peut être définie au préalable, l'épissure (SP) à un effort de traction (F) et qu'il est prévu un dispositif d'analyse et de commande (AE) qui détermine, en permanence, la puissance de la lumière découplée (EL).

16. Dispositif selon la revendication 15,

**caractérisé par le fait**

que le dispositif (PE) fait partie d'un appareil à épissurer les guides d'ondes lumineuses.

17. Dispositif selon une des revendications 15 ou 16,

**caractérisé par le fait**

que le mécanisme de traction est formé par un élément de réglage (SN) pouvant être déplacé dans le sens longitudinal du guide d'ondes lumineuses (F1).

18. Dispositif selon une des revendications 15 à 17,

**caractérisé par le fait**

qu'un coupleur en flexion (BK1, BK2) est respectivement prévu comme mécanisme de couplage.

19. Dispositif selon une des revendications 15 à 18,

**caractérisé par le fait**

que le mécanisme de traction est formé par un mécanisme en flexion (BV), qui fait ployer, perpendiculairement à son extension longitudinale, le guide d'ondes lumineuses (F1) entre ses deux mécanismes de couplage (BK1, BK2).

20. Dispositif selon une des revendications 15 à 19

**caractérisé par le fait**

que les mécanismes de couplage (BK1, BK2) sont intégrés dans le mécanisme de traction (HV1, HV2, SN).

EP 0 716 736 B1

BL1

F1

HV1  BK1

SL  OS

ZT1

FZ  F3  SPZ  SP3

SP

BV

y

x

SN  HVZ  BK2

EL  OE

ZTZ

F

L5

L1

AE

L4

L3

MG

L2

PE

ANZ

a[dB]

SK

SW

NK

P1  FM  F